# EUROPEAN PATENT SPECIFICATION

(11) **EP 4 273 603 B1**
(45) Date of publication and mention of the grant of the patent: **11.03.2026**
(21) Application number: 23171903.0
(22) Date of filing: 05.05.2023
(51) Int. Cl.: G02B 6/44

(54) **FIBER OPTIC CLOSURE**
FASEROPTISCHE KABELMUFFE
BOÎTIER POUR FIBRE OPTIQUE

(30) Priority: 07.05.2022 IN 202211026513
(43) Date of publication of application: 08.11.2023
(73) Proprietor: Sterlite Technologies Limited, Gurugram, Haryana 122102 (IN)
(72) Inventor: Cammarota, Ferdinando, 20024 Garbagnate Milanese, Milano (IT); Cirisano, Emanuele Pietro, 20024 Garbagnate Milanese, Milano (IT)
(74) Representative: Petraz, Gilberto Luigi

(56) References cited:
- WO-A1-2013/149846

## Description

### TECHNICAL FIELD

Embodiments of the present disclosure relate to the field of cable enclosure for optical fiber transmission systems and more particularly, relate to a fiber optic closure.

This application claims the benefit of Indian Application No. 202211026513 titled "FIBER OPTIC CLOSURE" filed by the applicant on May 7, 2022.

### BACKGROUND ART

Optical fiber splice closures (which are sometimes called splice cases or enclosures) generally comprise a casing which provides a closed space for containing splices between optical fibers. Such closures normally must also contain significant lengths of the spliced optical fibers. These lengths of optical fibers (which may be called "excess fiber") are normally required in order to be able to carry out the fiber splicing operation, which is generally performed using splicing equipment next to the closure. Excess fiber may also be required in order to organize the fiber splices in the closure. Optical fiber splice closures normally include some means of storing the splices in an organized manner. The excess optical fiber associated with the organized splices needs to be stored in the closure in such a way that its bend radius does not fall below the critical bend radius of the fiber (which is typically about 30 nm). The critical bend radius of an optical fiber is the minimum safe radius at which the fiber may be bent without causing damage to the fiber or causing signal loss in the fiber.

While using the optical fiber cables to enable communication, there remains a requirement to manage bundles of the optical fiber cables. In order to reduce the light loss for the optical fiber cables, the optical fiber cables are required to splice. The splicing of the optical fiber cables involves joining ends of the fiber cable without affecting signal transmission through the spliced fiber cable. The spliced cables need to be handled with care in order to eliminate any possibility of breaking off the spliced fiber cable, which eventually leads to signal loss/attenuation.

There are various splicing enclosures known in the art that are designed to encase the spliced or joints of the optical fiber cable and simultaneously allow management of the optical cables within the enclosure. One of such splicing enclosure as described in US patent number 5590234. The reference discloses about a number of splicing trays that are stacked such that the splicing trays receive the spliced optical fiber cable. Each splicing tray support unit of the enclosure defines arcuate formations and spools that act as guiding elements for the optical fiber cable passing through the splice enclosure.

Other US patent references 6275639 and 6304707 i disclose splicing enclosure that exhibits different shape and geometrical construction. The references disclose about optical fiber splice holders for holding spliced optical fiber cables. The references also disclose about stacking of the fiber storage trays such that each storage tray stores optical fiber cable. Document WO2013149846A1 discloses a telecommunications enclosure and organizer.

The problem associated with the splice enclosures is that the splice enclosure ropes in fixed arcuate formations and guides for routing the optical fiber cable within the splice enclosure. This limits the configurational flexibility of the optical fiber cable within the splice enclosure. Since the splice enclosure is designed to harness a number of optical fiber cables that require adjustment or modify the configuration of the optical fiber cable within the splice enclosure. Further, avoiding energy losses due to optimised routing of the fiber cable necessitates modification in the configurational arrangement of the optical fiber cable

In light of the above-stated discussion, there is an urgent need for a technical solution that overcomes the above-stated limitations. Thus, the present disclosure provides an improved optical fiber splicing enclosure.

### SUMMARY OF THE DISCLOSURE

Embodiments of the present disclosure provide fiber optic closure characterized in that a splicing tray support unit; and a fiber storage unit coupled to the splicing tray support unit. In particular, the fiber storage unit comprising a fiber guiding unit disposed on the splicing tray support unit having first and second set of guide structures adapted to route one or more incoming optical fibers and one more outgoing optical fiber, respectively, passing through the fiber guiding unit; and one or more wings pivotally mounted on the splicing tray support unit adapted to allow passage of the one or more fiber cables in one or more routing configurations.

According to the first aspect of the present disclosure, the fiber guiding unit further comprising a first side and a second side. The first set of guide structures extends in the first side and the second set of guide structures extends in the second side to guide the one or more optical fibers towards the one or more wings.

In accordance with an embodiment of the present disclosure, the base has a plurality of ports comprising input ports and output ports.

According to the second aspect of the present disclosure, the fiber guiding unit further comprises a first end and a second end such that the first end is coupled to the base and the second end is coupled to the splicing tray support unit. Each of the first and second set of fiber guiding structures comprises a plurality of horizontal slabs and a plurality of vertical walls.

According to the third aspect of the present disclosure, the plurality of horizontal slabs and the plurality of vertical walls each of the first and second set of fiber guiding structures are arranged to form a plurality of left and right recesses, respectively, to pass an optical fiber of the one or more fiber cables.

According to the fourth aspect of the present disclosure, the one or more wings comprises first and second wings such that the first wing is mounted at the first side of the splicing tray support unit and the second wing is mounted at the second side of the splicing tray support unit.

According to the fifth aspect of the present disclosure, the first wing is adapted to rotate in an anti-clockwise direction and the second wing is adapted to rotate in a clockwise direction.

In accordance with an embodiment of the present disclosure, the first and second wings are removably coupled to the splicing tray support unit by way of a first and second pivot pins, respectively.

According to the sixth aspect of the present disclosure, each of the first and second wings comprising first through third corners such that the first and second wings are adapted to pivot with respect to the splicing tray support unit at the first corner.

According to the seventh aspect of the present disclosure, the fiber guiding unit is mounted on the base and the splicing tray support unit by way of one or more fasteners.

In accordance with an embodiment of the present disclosure, a cover unit that is adapted to enclose the splicing tray support unit.

In accordance with an embodiment of the present disclosure, the first set of guiding structures is adapted to pass incoming optical fiber of the one or more fiber cables towards the first wing. And, the second set of guiding structures is adapted to pass incoming optical fiber of the one or more fiber cables towards the second wing.

The foregoing solutions of the present disclosure are attained by providing a conduit clamp assembly for a fiber closure.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A illustrates a top view of a fiber optic closure in accordance with an embodiment of the present disclosure;
Fig. 1B illustrates a top view of the fiber optic closure in accordance with an embodiment of the present disclosure;
Fig. 1C illustrates another top view of the fiber optic closure in accordance with an embodiment of the present disclosure;
Fig. 1D illustrates yet another top view of the fiber optic closure in accordance with an embodiment of the present disclosure;
Fig. 2 illustrates a fiber guiding unit of the fiber optic closure in accordance with an embodiment of the present disclosure;
Fig. 3A illustrates the first wing of the fiber optic closure in accordance with an embodiment of the present disclosure;
Fig. 3B illustrates the second wing of the fiber optic closure in accordance with an embodiment of the present disclosure;
Fig. 4A illustrates a first routing configuration of the fiber optic closure having first and second wings in an open position in accordance with an embodiment of the present disclosure;
Fig. 4B illustrates a second routing configuration of the fiber optic closure having the first and second wings in a first closed position in accordance with an embodiment of the present disclosure;
Fig. 4C illustrates a third routing configuration of the fiber optic closure having the first and second wings in a second closed position in accordance with an embodiment of the present disclosure;
Fig. 5 illustrates a cover unit of the fiber optic closure in accordance with an embodiment of the present disclosure.

The fiber optic closure is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "proximal ends" refers to ends of the first through fifth ports 112a-112e that faces towards the splicing tray support unit 104.

The term "distal ends" refers to ends of the first through fifth ports 112a-112e that faces away from the splicing tray support unit 104.

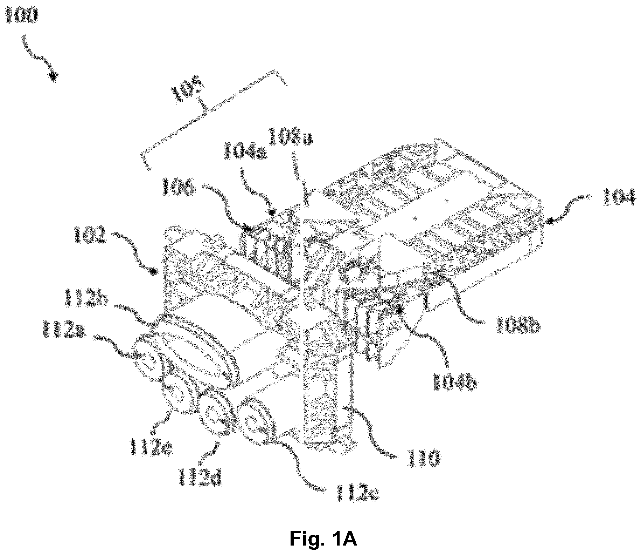

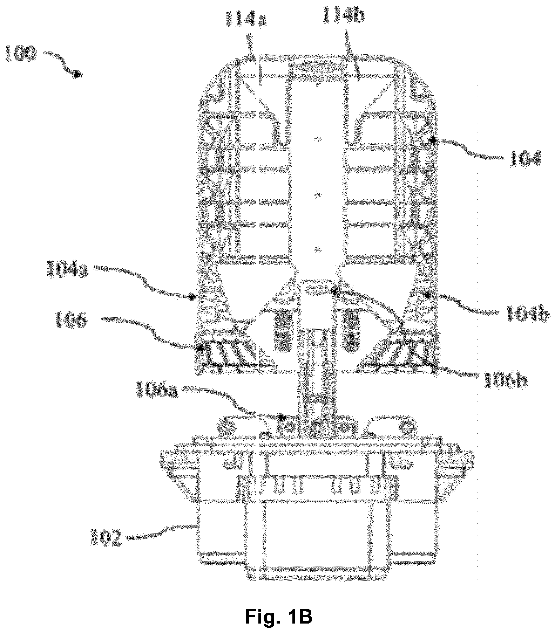

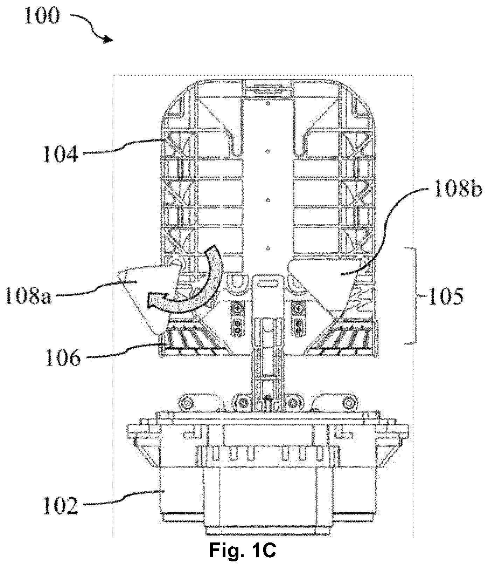

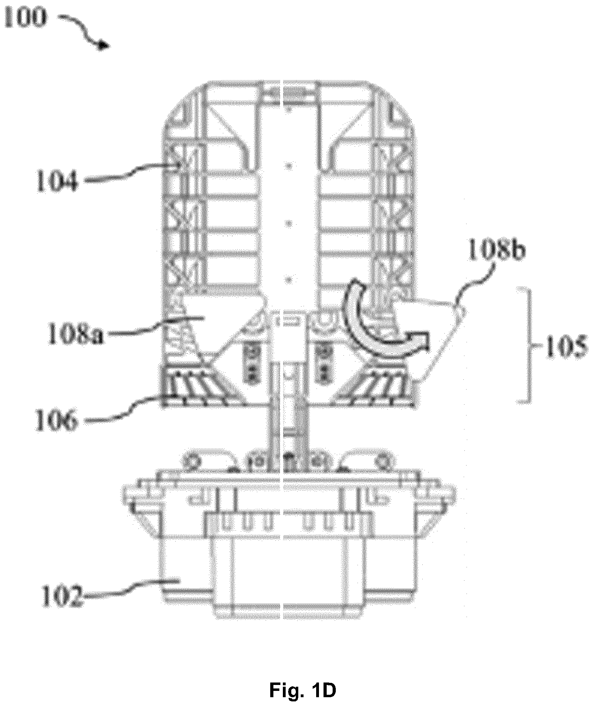

Referring to Fig. 1A and 1B illustrating different views of a fiber optic closure 100. The fiber optic closure 100 may be a passive component adapted to protect interconnections between a plurality of optical fibers of a plurality of optical cables. Moreover, the fiber optic closure 100 may provide improved protection to a fiber splicing point. Further, the fiber optic closure 100, by virtue of design specifications, may provide better user experience and safer operating environment.

In some aspects of the present disclosure, the fiber optic closure 100 may have fully mechanical sealing structures that ensures improved sealing performance. In some aspects of the present disclosure, the fiber optic closure 100 may be deployed in installations such as, but not limited to, an aerial installation, an underground installation, pipelines, hand holes, and the like. Aspects of the present disclosure are intended to include and otherwise cover any type of the installations for the fiber optic closure 100, including known, related, and later developed technologies.

In accordance with an embodiment of the present disclosure, the fiber optic closure 100 has a base 102, a splicing tray support unit 104, and a fiber storage unit 105. In particular, the base 102, the splicing tray support unit 104, the fiber storage unit 105 may be mechanically coupled to form the fiber optic closure 100. Moreover, the base 102 may have a vertical panel 110, a plurality of ports 112 of which first through fifth ports 112a-112e. Specifically, the vertical panel 110 and the first through fifth ports 112a-112e may be fabricated as a single piece by way of a molding process.

In accordance with an embodiment of the present disclosure, molding process may include, but is not limited to, a compression molding, a melt molding, a transfer molding, an injection molding, and the like. Aspects of the present disclosure are intended to include and/or otherwise cover any type of the molding process to fabricate the base 102, including known, related, and later developed molding processes.

Alternatively, the base 102 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. Further, the base 102 may be fabricated using a metal such as stainless steel to provide improved durability in harsh installation conditions. Aspects of the present disclosure are intended to include and/or otherwise cover any type of the molding material for the base 102.

In accordance with an embodiment of the present disclosure, first through fifth ports 112a-112e may be adapted to be utilized as one of, an input port for the optical cable and an output port for the optical cable. In particular, each port of the first through fifth ports 112a-112e may be adapted to be utilized as the input port and/or the output port as per an installation requirement. Moreover, the first through fifth ports 112a-112e may be through holes that may facilitate to insert the optical cable in the fiber optic closure 100 and/or receive the optical cable from the fiber optic closure 100. Further, each port of the first through fifth ports 112a-112e may have a distal end and a proximal end such that the optical cable may be inserted through the distal end of the first through fifth ports 112a-112e when the first through fifth ports 112a-112e are utilized as the input ports and the optical cable may be received from the fiber optic closure 100 post splicing when the first through fifth ports 112a-112e are utilized as the output ports.

In some aspects of the present disclosure, the proximal end of each port of the first through fifth ports 112a-112e may have a mechanical seal (not shown) that may facilitate a leak proof structure of the fiber optic closure 100.

In accordance with an embodiment of the present disclosure, the splicing tray support unit 104 may be rigid structure that may be adapted support one or more splicing trays (not shown) for efficiently splicing incoming optical fibers of the optical cable inserted through one of the input ports *(i.e.,* the first through fifth ports 112a-112e) and further route the spliced outgoing optical fibers out from the fiber optic closure 100 through one of the output ports *(i.e.,* the first through fifth ports 112a-112e). The splicing tray support unit 104 may have a first side 104a and a second side 104b that is opposite to the first side 104a. In some aspects of the present disclosure, the splicing tray support unit 104 may be fabricated by way of a molding process. Examples of the molding process may include, but is not limited to, a compression molding, a melt molding, a transfer molding, an injection molding, and the like. Aspects of the present disclosure are intended to include and/or otherwise cover any type of the molding process to fabricate the splicing tray support unit 104, including known, related, and later developed molding processes. In some aspects of the present disclosure, the splicing tray support unit 104 may be fabricated using a molding material such as, but not limited to, Polycarbonate (PC), Acrylonitrile butadiene styrene (ABS), Polypropylene (PP), Nylon Plastic (PA), a Glass-filled polymer material, and the like.

In some other aspects of the present disclosure, the splicing tray support unit 104 may be fabricated using a metal such as stainless steel to provide improved durability in harsh installation conditions. Aspects of the present disclosure are intended to include and/or otherwise cover any type of the molding material for the splicing tray support unit 104.

In accordance with an embodiment of the present disclosure, the fiber storage unit 105 may have a fiber guiding unit 106, and one or more wings of which first and second wings 108a and 108b are shown. In particular, the fiber guiding unit 106 may be a rigid structure disposed in the splicing tray support unit 104. Moreover, the fiber guiding unit 106 may be adapted to couple the base 102 with the splicing tray support unit 104. Further, the fiber guiding unit 106 may have a first end 106a (as shown later in Fig. 1B) and a second end 106b (as shown later in Fig. 1B) such that the first end 106a of the fiber guiding unit 106 may be coupled to the base 102 and the second end 106b is coupled to the splicing tray support unit 104.

In accordance with an embodiment of the present disclosure, the fiber guiding unit 106 may be adapted to route the incoming optical fibers of the optical cable inserted through one of the input ports *(i.e.,* the first through fifth ports 112a-112e) and further guide the spliced outgoing optical fibers out from the fiber optic closure 100 through one of the output ports *(i.e.,* the first through fifth ports 112a-112e).

In some aspects of the present disclosure, the fiber guiding unit 106 may be fabricated by way of a molding process. Examples of the molding process may include, but is not limited to, a compression molding, a melt molding, a transfer molding, an injection molding, and the like. Aspects of the present disclosure are intended to include and/or otherwise cover any type of the molding process to fabricate the fiber guiding unit 106, including known, related, and later developed molding processes. In some aspects of the present disclosure, the fiber guiding unit 106 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. In some other aspects of the present disclosure, the fiber guiding unit 106 may be fabricated using a metal such as stainless steel to provide improved durability in harsh installation conditions. Aspects of the present disclosure are intended to include and/or otherwise cover any type of the molding material for the fiber guiding unit 106.

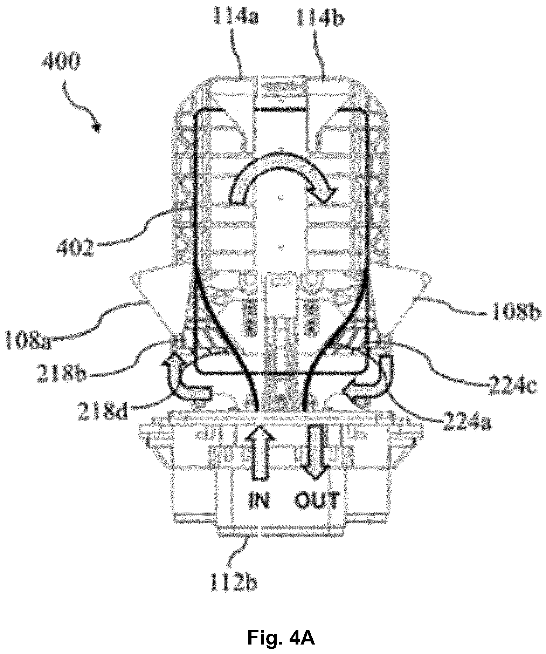

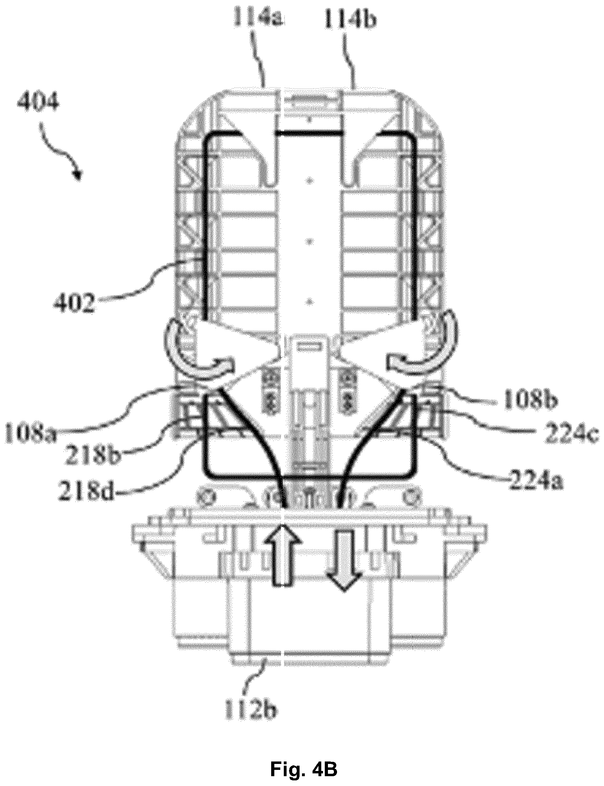

In accordance with an embodiment of the present disclosure, the first and second wings 108a and 108b may be triangular shaped wings that may be pivotally mounted on the splicing tray support unit 104. Particularly, the first wing 108a may be pivotally mounted at the first side 104a of the splicing tray support unit 104. Moreover, the first wing 108a may be adapted to pivot with respect to the splicing tray support unit 104 in an anti-clockwise direction (as shown later in Fig. 4B). The second wing 108b may be pivotally mounted at the second side 104b of the splicing tray support unit 104. Further, the second wing 108b may be adapted to pivot with respect to the splicing tray support unit 104 in a clockwise direction (as shown later in Fig. 4B). The first and second wings 108a and 108b may be adapted to allow passage of the incoming and outgoing optical fibers of the optical cable, respectively, to and from the fiber optic closure 100 in one or more routing configurations (as shown later in FIGs. 4A-4B).

In accordance with an embodiment of the present disclosure, the first and second wings 108a and 108b may be rotated from a closed position to an open position and similarly from the open position to the closed position, that facilitate to achieve a plurality of fiber storage configurations. Alternatively, the first and second wings 108a and 108b may be removably coupled to the splicing tray support unit 104 by way of first and second pivot pins (not shown). In some aspects of the present disclosure, the first and second wings 108a and 108b may be fabricated by way of a molding process. Examples of the molding process may include, but is not limited to, a compression molding, a melt molding, a transfer molding, an injection molding, and the like. Aspects of the present disclosure are intended to include and/or otherwise cover any type of the molding process to fabricate the first and second wings 108a and 108b, including known, related, and later developed molding processes. In some aspects of the present disclosure, the first and second wings 108a and 108b may be fabricated using a molding material such as, but not limited to, Polycarbonate (PC), Acrylonitrile butadiene styrene (ABS), Polypropylene (PP), Nylon Plastic (PA), a Glass-filled polymer material, and the like. In some other aspects of the present disclosure, the first and second wings 108a and 108b may be fabricated using a metal such as stainless steel to provide improved durability in harsh installation conditions. Aspects of the present disclosure are intended to include and/or otherwise cover any type of the molding material for the first and second wings 108a and 108b.

In accordance with an embodiment of the present disclosure, the fiber optic closure 100 may have the base 102, the splicing tray support unit 104, the fiber storage unit 105 having the fiber guiding unit 106, and first and second wings 108a and 108b. As illustrated, the splicing tray support unit 104 may have a plurality of routing structures 114 of which first and second routing structures 114a and 114b are shown. Particularly, the first and second routing structures 114a and 114b may be adapted to engage the optical fibers of the optical cables such that the optical fibers can be routed from one direction to another based on the one or more routing configurations. In some aspects of the preset disclosure, the first and second routing structures 114a and 114b may be fabricated as protruded components of the splicing tray support unit 104 during the fabrication process of the splicing tray support unit 104. Alternatively, the first and second routing structures 114a and 114b may be removably attached to the splicing tray support unit 104 based on the requirements of the one or more routing configurations. As illustrated, the first routing structure 114a may be disposed horizontally opposite to the first wing 108a such that the optical fibers of the optical cables can be routed from the first wing 108a towards the first routing structure 114a. Further, the second routing structure 114b may be disposed horizontally opposite to the second wing 108b such that the optical fibers of the optical cables can be routed from the first wing 108a towards the first routing structure 114a and then subsequently through the second routing structure 114b towards the second wing 108b.

In accordance with an embodiment of the present disclosure, the splicing tray support unit 104 has the first side 104a and the second side 104b. The first and second side 104a and 104b may have the first pivot pin and the second pivot pin (not shown), respectively, such that the first wing 108a is pivotally mounted on the first side 104a of the splicing tray support unit 104 and the second wing 108b is pivotally mounted on the second side 104b of the splicing tray support unit 104. As discussed in Fig. 1A, the first wing 108a may be adapted to pivot with respect to the splicing tray support unit 104 in the anti-clockwise direction and the second wings 108b may be adapted to pivot with respect to the splicing tray support unit 104 in the clockwise direction to allow passage of the incoming and outgoing optical fibers of the optical cable, respectively, to and from the fiber optic closure 100 as per the one or more routing configurations.

In accordance with an embodiment of the present disclosure, the fiber guiding unit 106 may have the first end 106a coupled to the base 102 and the second end 106b coupled to the splicing tray support unit 104, respectively. In some aspects of the present disclosure, the first end 106a of the fiber guiding unit 106 may be coupled to the base 102 and the second end 106b of the fiber guiding unit 106 may be coupled to the splicing tray support unit 104 by way of one or more fasteners (not shown). In some other aspects of the present disclosure, the first end 106a of the fiber guiding unit 106 may be coupled to the base 102 and the second end 106b of the fiber guiding unit 106 may be coupled to the splicing tray support unit 104 by way of a snap fit mechanism.

In accordance with an embodiment of the present disclosure, the fiber storage unit 105 may have the fiber guiding unit 106 and the first and second wings 108a and 108b. In particular, the first and second wings 108a and 108b may be pivotally mounted on the splicing tray support unit 104. The first wing 108a may be adapted to rotate in the anti-clockwise direction and the second wing 108b may be adapted to rotate in the clockwise direction. Moreover, the first wing 108a may be rotated in the anti-clockwise direction to set the first wing 108a in an open position while keeping the second wing 108b is in a closed position.

In accordance with an embodiment of the present disclosure, the fiber storage unit 105 may have the fiber guiding unit 106 and the first and second wings 108a and 108b. In particular, the first and second wings 108a and 108b may be pivotally mounted on the splicing tray support unit 104. Moreover, the first wing 108a may be adapted to rotate in the anti-clockwise direction and the second wing 108b may be adapted to rotate in the clockwise direction. Further, the second wing 108b may be rotated in the clockwise direction to set the second wing 108b in an open position while keeping the first wing 108a is in a closed position.

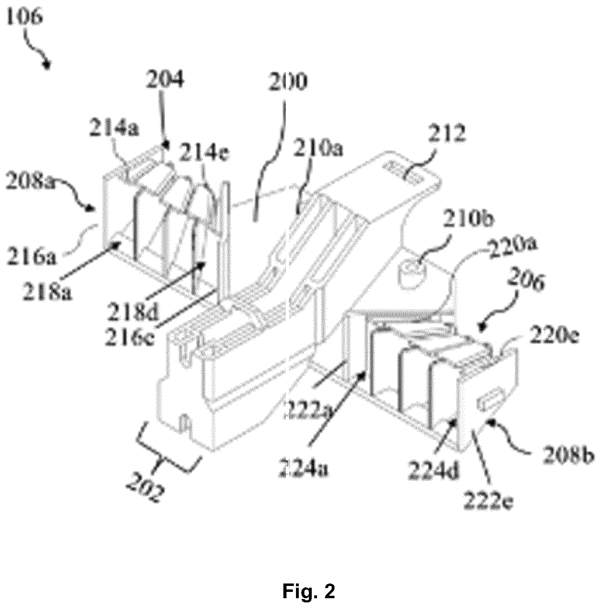

Fig. 2 illustrates the fiber guiding unit 106 of the fiber optic closure 100 adapted to be disposed in the splicing tray support unit 104. In particular, the fiber guiding unit 106 may have a base plate 200, a central partitioning structure 202, and first and second set of guide structures 204 and 206. Moreover, the base plate 200, the central partitioning structure 202, and the first and second set of guide structures 204 and 206 may be fabricated as a single piece by way of the molding process.

In accordance with an embodiment of the present disclosure, the fiber guiding unit 106 may have a first side 208a and a second side 208b such that the first set of guide structures 204 extends in the first side 208a and the second set of guide structures 206 extends in the second side 208b to guide the one or more optical fibers towards the first and second wings 108a and 108b, respectively. Further, the first set of guide structures 204 may extend in the first side 208a of the fiber guiding unit 106 to guide the one or more optical fibers towards the first wing 108a. The second set of guide structures 206 may extend in the second side 208b of the fiber guiding unit 106 to guide the one or more optical fibers towards the second wing 108b.

In accordance with an embodiment of the present disclosure, the base plate 200 may be a rigid structure that may be adapted to provide support to the central partitioning structure 202, and the first and second set of guide structures 204 and 206 of the fiber guiding unit 106. The base plate 200 may have a plurality of mating holes of which first and second mating holes 210a and 210b. Particularly, the first and second mating holes 210a and 210b may be disposed near the second end 106b of the fiber guiding unit 106 along first and second side walls of the central partitioning structure 202, respectively.

In accordance with an embodiment of the present disclosure, the first and second mating holes 210a and 210b may be threaded holes that may be adapted to receive a plurality of fasteners to couple the fiber guiding unit 106 to the splicing tray support unit 104. Further, the central partitioning structure 202 may have a distal end and a proximal end such that the distal end of the central partitioning structure 202 may be aligned with the base 102 and the proximal end of the central partitioning structure 202 may have a cavity 212 that may facilitate to align the proximal end with the splicing tray support unit 104, when the fiber guiding unit 106 is utilized to couple the base 102 and the splicing tray support unit 104 to form the fiber optic closure 100 (as shown in Fig. 1A).

In accordance with an embodiment of the present disclosure, the first and second set of guide structures 204 and 206 may be adapted to route the one or more incoming optical fibers and the one more outgoing optical fibers of the optical cable, respectively, passing through the fiber guiding unit 104. In some aspects of the present disclosure, the first set of guide structures 204 may be adapted to route the one or more incoming optical fibers of the optical cable passing through the fiber guiding unit 104 and the second set of guide structures 206 may be adapted to route the one or more outgoing optical fibers of the optical cable passing through the fiber guiding unit 104. It will be apparent to a person skilled in the art that the first and second set of guide structures 204 and 206 are disclosed to be adapted to route the one or more incoming optical fibers and the one or more outgoing optical fibers, respectively, to make the illustrations concise and clear and should not be considered as a limitation of the present disclosure. In various other aspects of the present disclosure, the first and second set of guide structures 204 and 206 can be interchangeably utilized to route the one or more incoming optical fibers and the one or more outgoing optical fibers, without deviating from the scope of the present disclosure.

In accordance with an embodiment of the present disclosure, the first set of guiding structures 204 may have a plurality of horizontal slabs of which first through fifth horizontal slabs 214a-214e are shown and a plurality of vertical walls of which first through fifth vertical walls 216a-216e are shown. By virtue of an arrangement of the first through fifth horizontal slabs 214a-214e over the first through fifth vertical walls 216a-216e, a plurality of left guiding structures may be formed. The plurality of left guiding structures may have first through fourth left guiding structures 218a-218d. Specifically, the first through fifth horizontal slabs 214a-214e and the first through fifth vertical walls 216a-216e may be arranged in a way to form the first through fourth left guiding structures 218a-218d. The first through fourth left guiding structures 218a-218d may be adapted to pass the optical fibers of the one or more fiber cables. In some aspects of the present disclosure, the first through fourth left guiding structures 218a-218d may be adapted to pass the incoming optical fibers towards the first wing 108a.

Alternatively, the first through fourth left guiding structures 218a-218d may be adapted to pass the outgoing optical fibers received through the first wing 108a (as shown in Fig. 1A) towards one of the first through fifth ports 112a-112e (as shown in Fig. 1A).

Similarly, the second set of guiding structures 206 may have a plurality of horizontal slabs of which first through fifth horizontal slabs 220a-220e are shown and a plurality of vertical walls of which first through fifth vertical walls 222a-222e are shown. By virtue of an arrangement of the first through fifth horizontal slabs 220a-220e over the first through fifth vertical walls 222a-222e, a plurality of right guiding structures may be formed. The plurality of right guiding structures may have first through fourth right guiding structures 224a-224d. Specifically, the first through fifth horizontal slabs 220a-220e and the first through fifth vertical walls 222a-222e may be arranged in a way to form the first through fourth right guiding structures 224a-224d.

In accordance with an embodiment of the present disclosure, the first through fourth right guiding structures 224a-224d are adapted to pass the optical fibers of the one or more fiber cables. Alternatively, the first through fourth right guiding structures 224a-224d may be adapted to pass the outgoing optical fibers received through the second wing 108b (as shown in Fig. 1A) towards one of the first through fifth ports 112a-112e (as shown in Fig. 1A).

In some other aspects of the present disclosure, the first through fourth right guiding structures 224a-224d may be adapted to pass the incoming optical fibers towards the second wing 108b (as shown in Fig. 1A).

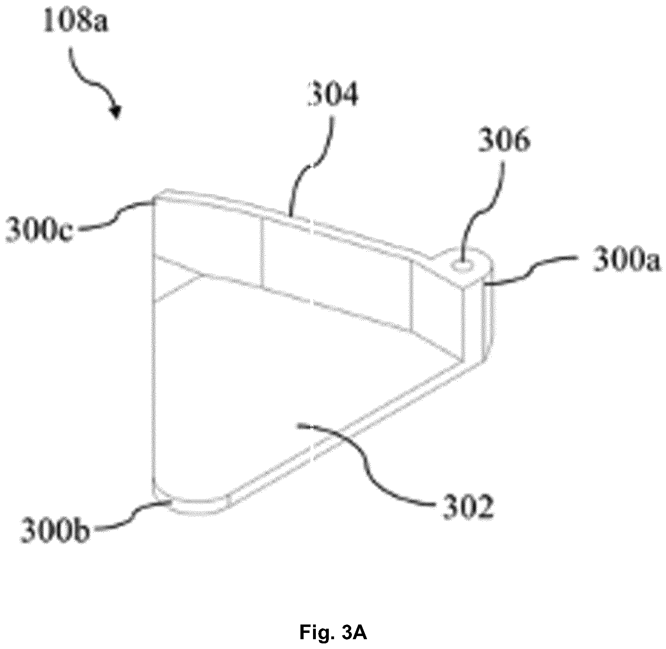

Fig. 3A illustrates the first wing 108a of the fiber optic closure 100. In particular, the first wings 108a may be a triangular shaped wing having first through third corners 300a-300c. Moreover, the first wing 108a may have a bottom panel 302 and a first engagement wall 304 that may extend vertically with respect to the bottom panel 302 and between the first and third corners 300a and 300c. Further, the vertical engagement wall 304 may be adapted to engage with the optical fibers when the first wing 108a is in close position. Furthermore, the first wing 108a may have a first pivot hole 306 that may be adapted to receive the first pivot pin (not shown) such that the first wing 108a is pivotally coupled to the first side of the splicing tray support unit 104. Specifically, the first pivot hole 306 may be provided at first corner 300a of the first wing 108a such that the first wing 108a pivots with respect to the splicing tray support unit 104 at the first corner 300a.

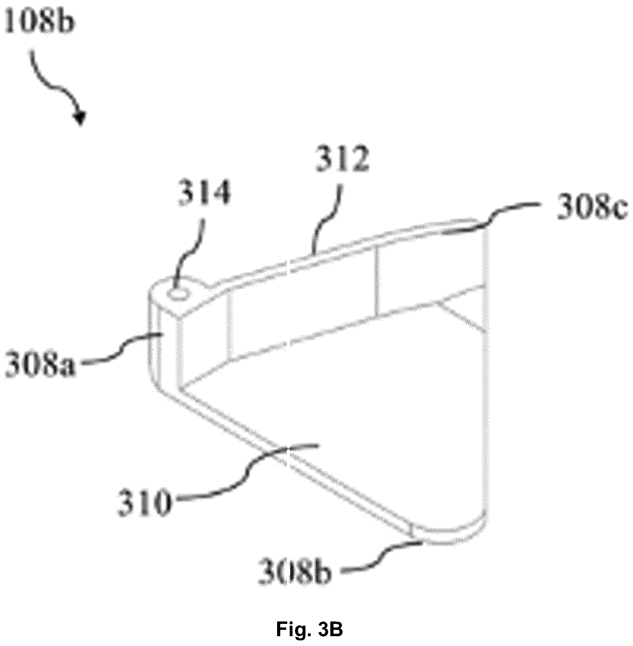

Fig. 3B illustrates the second wing 108b of the fiber optic closure 100. Particularly, the second wings 108b may be a triangular shaped wing that may be structurally and functionally similar to the first wings 108a. However, in some aspects of the present disclosure, an orientation of the second wing 108b may be different from an orientation of the first wing 108a. Moreover, the second wing 108b may have first through third corners 308a-308c. Further, the first wing 108a may have a bottom panel 310 and a first engagement wall 312 that may extend vertically with respect to the bottom panel 310 and between the first and third corners 300a and 300c.

In accordance with an embodiment of the present disclosure, the vertical engagement wall 312 may be adapted to engage with the optical fibers when the first wing 108a is in close position. Further, the second wing 108b may have a second pivot hole 314 that may be adapted to receive the second pivot pin (not shown) such that the second wing 108b is pivotally coupled to the second side of the splicing tray support unit 104. Specifically, the second pivot hole 314 may be provided at first corner 308a of the second wing 108b such that the second wing 108b pivots with respect to the splicing tray support unit 104 at the first corner 308a.

Fig. 4A illustrates a first routing configuration 400 of the fiber optic closure 100 having the first and second wings 108a and 108b in the open position. In operation, an optical cable (not shown) having a plurality of optical fibers of which an optical fiber 402 is shown, may be inserted into one of the first through fifth ports 112a-112e (for *e.g.,* the first port 112b). Particularly, the optical fiber 402 may be routed towards the first routing structure 114a through the fourth left guiding structure 218d. Further, the optical fiber 402 may be routed towards the second routing structure 114b and thus towards the third right guiding structure 224c. The optical fiber 402 is further routed towards the second left guiding structure 218b and thus towards the first routing structure 114a forming a closed loop. Through the first routing structure 114a, the optical fiber 402 may be routed towards the second routing structure 114b and thus towards the first right guiding structure 224a such that the optical fiber 402 exits the fiber optic closure 100 through one of the one of the first through fifth ports 112a-112e for *e.g.,* the fourth port 112b (as shown in Fig. 1A) thus realizing the first routing configuration when the first and second wings 108a and 108b are in the open position. In such configuration, the open position of the first and second wings 108a and 108b facilitates manipulating position of the optical fiber 402 based on various routing requirements.

Fig. 4B illustrates a second routing configuration 404 of the fiber optic closure 100 having the first and second wings 108a and 108b in a first closed position. In operation, the optical cable (not shown) having the optical fiber 402 may be inserted into one of the first through fifth ports 112a-112e for *e.g.,* the first port 112b (as shown in Fig. 1A). Moreover, the optical fiber 402 may be routed towards the first routing structure 114a through the fourth left guiding structure 218d. Further, the optical fiber 402 may be routed towards the second routing structure 114b and thus towards the third right guiding structure 224c.

In accordance with an embodiment of the present disclosure, the optical fiber 402 is further routed towards the second left guiding structure 218b and thus towards the first routing structure 114a forming the closed loop. Through the first routing structure 114a, the optical fiber 402 may be routed towards the second routing structure 114b and thus towards the first right guiding structure 224a such that the optical fiber 402 exits the fiber optic closure 100 through one of the one of the first through fifth ports 112a-112e (for *e.g.,* the fourth port 112b).

In the illustrated second routing configuration, the first and second wings 108a and 108b are in the first closed position. Specifically, the first and second wings 108a and 108b may be rotated in the anti-clockwise and the clockwise direction, respectively, to realize the first closed position, such that the first and second engagement walls 304 and 312 of the first and second wings 108a and 108b, respectively, are engaged with the optical fiber 402 to route according to the second routing configuration thus ensuring safe containment of the optical fiber 402.

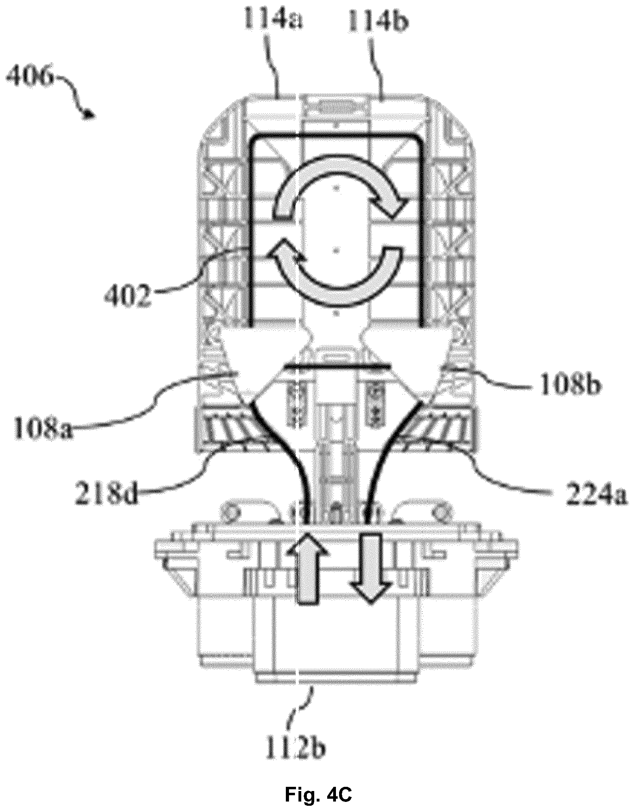

Fig. 4C illustrates a third routing configuration 406 of the fiber optic closure 100 having the first and second wings 108a and 108b in a second closed position. In operation, the optical cable (not shown) having the optical fiber 402 may be inserted into one of the first through fifth ports 112a-112e (for *e.g.,* the first port 112b). In particular, the optical fiber 402 may be routed towards the first routing structure 114a through the fourth left guiding structure 218d. Moreover, the optical fiber 402 may be routed towards the second routing structure 114b and back towards the first routing structure 114a thus forming the closed loop. Through the first routing structure 114a, the optical fiber 402 may be routed towards the second routing structure 114b and thus towards the first right guiding structure 224a such that the optical fiber 402 exits the fiber optic closure 100 through one of the one of the first through fifth ports 112a-112e (for *e.g.,* the fourth port 112b).

In the illustrated third routing configuration, the first and second wings 108a and 108b are in the second closed position. Specifically, the first and second wings 108a and 108b may be rotated in the anti-clockwise and the clockwise direction, respectively, to realize the second closed position, such that the first and second engagement walls 304 and 312 (as shown in Fig. 3A and Fig. 3B) of the first and second wings 108a and 108b, respectively, are engaged with the optical fiber 402 to route according to the third routing configuration thus ensuring safe containment of the optical fiber 402.

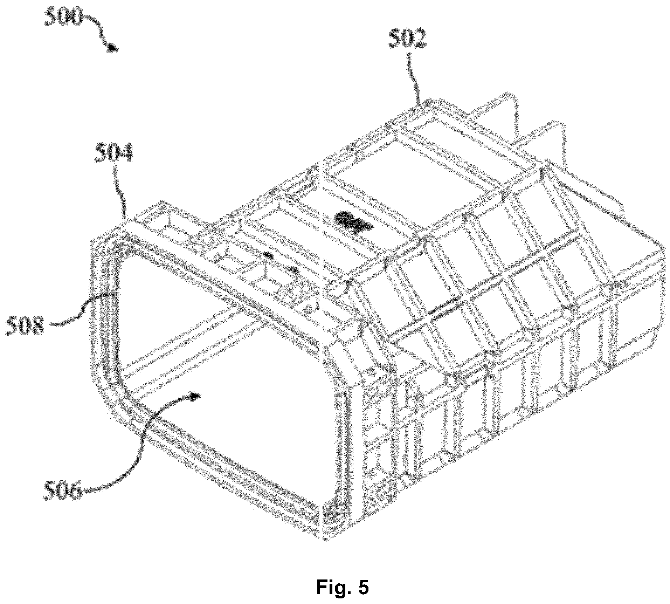

Fig. 5 illustrates a cover unit 500 of the fiber optic closure 100 having a cover unit 500 with a first portion 502 and a second portion 504 such that the first portion 502 and the second portion 504 may be attached to each other to form the cover unit 500. In some aspects of the present disclosure, the first portion 502 and the second portion 504 may be fabricated as a single piece by way of a molding process. Examples of the molding process may include, but is not limited to, a compression molding, a melt molding, a transfer molding, an injection molding, and the like. Aspects of the present disclosure are intended to include and/or otherwise cover any type of the molding process to fabricate the first portion 502 and the second portion 504, including known, related, and later developed molding processes. In some aspects of the present disclosure, the first portion 502 and the second portion 504 may be fabricated using a molding material such as, but not limited to, Polycarbonate (PC), Acrylonitrile butadiene styrene (ABS), Polypropylene (PP), Nylon Plastic (PA), a Glass-filled polymer material, and the like.

In accordance with an embodiment of the present disclosure, the base 102 may be fabricated using a metal such as stainless steel to provide improved durability in harsh installation conditions. Aspects of the present disclosure are intended to include and/or otherwise cover any type of the molding material for the first portion 502 and the second portion 504.

As illustrated, the first portion 502 may be a hollow structure that may be adapted to receive the splicing tray support unit 104. The second portion 504 may have an opening 506 that may be adapted to facilitate in insertion of the splicing tray support unit 104 into the hollow structure of the first portion 502. Moreover, the second portion 504 may have a mating sleeve 508 disposed along a periphery of the opening such that the mating sleeve 508 engages with the base 102 of the fiber optic closure 100 to enclose the splicing tray support unit 104 inside the cover unit 500.

In accordance with an embodiment of the present disclosure, the first and second wings 108a and 108b pivotally mounted on the splicing tray support unit 104 are adapted to rotate in the anti-clockwise direction and clockwise direction, respectively, may facilitate to provide access to the stored optical fiber 402, that results in various storage directions and configurations based on different requirements. Further, the rotatable first and second wings 108a and 108b facilitate easy installation of the optical fibers inside the fiber optic closure 100. Furthermore, the fiber guiding unit 106 facilitates storage of different types of optical fiber cables in one fiber optic closure (*i.e.,* the fiber optic closure 100).

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the scope of the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A fiber optic closure (100) comprising:
a splicing tray support unit (104); and
a fiber storage unit (105) coupled to the splicing tray support unit (104), wherein the fiber storage unit (105) comprises:
a fiber guiding unit (106) disposed on the splicing tray support unit (104), wherein the fiber guiding unit (106) comprising first and second set of guide structures (204, 206) adapted to route one or more incoming optical fibers and one more outgoing optical fiber, respectively, passing through the fiber guiding unit (106);
**characterized in that**
the fiber storage unit (105) comprises one or more wings (108a, 108b) pivotally mounted on the splicing tray support unit (104), and adapted to allow passage of the one or more fiber cables in one or more routing configurations.

2. The fiber optic closure (100) as claimed in claim 1, wherein the fiber guiding unit (106) further comprises a first side and a second side.

3. The fiber optic closure (100) as claimed in claim 2, wherein the first set of guide structures (204) extends in the first side and the second set of guide structures (206) extends in the second side to guide the one or more optical fibers towards the one or more wings.

4. The fiber optic closure (100) as claimed in claim 1, further comprising a base (102) having a plurality of ports (112), wherein the plurality of ports comprises input ports and output ports.

5. The fiber optic closure (100) as claimed in claim 1, wherein the fiber guiding unit (106) further comprises a first end and a second end such that the first end is coupled to the base (102) and the second end is coupled to the splicing tray support unit (104).

6. The fiber optic closure (100) as claimed in claim 1, wherein each of the first and second set of fiber guiding structures (204, 206) comprises a plurality of horizontal slabs (214a-214e) and a plurality of vertical walls (216a-216e).

7. The fiber optic closure (100) as claimed in claim 1, wherein the plurality of horizontal slabs (214a-214e) and the plurality of vertical walls (216a-216e) each of the first and second set of fiber guiding structures (204, 206) are arranged to form a plurality of left and right recesses, respectively, to pass an optical fiber of the one or more fiber cables.

8. The fiber optic closure (100) as claimed in claim 1, wherein the one or more wings (108a, 108b) comprise first and second wings such that the first wing (108a) is mounted at the first side of the splicing tray support unit and the second wing (108b) is mounted at the second side of the splicing tray support unit (104).

9. The fiber optic closure (100) as claimed in claim 6, wherein the first wing (108a) is adapted to rotate in an anti-clockwise direction and the second wing (108b) is adapted to rotate in a clockwise direction.

10. The fiber optic closure (100) as claimed in claim 6, wherein the first and second wings (108a, 108b) are removably coupled to the splicing tray support unit (104) by way of a first and second pivot pins, respectively.

11. The fiber optic closure (100) as claimed in claim 1, wherein each of the first and second wings (108a, 108b) comprises first through third corners such that the first and second wings (108a, 108b) are adapted to pivot with respect to the splicing tray support unit (104) at the first corner (300a).

12. The fiber optic closure (100) as claimed in claim 1, wherein the fiber guiding unit (106) is mounted on the base (102) and the splicing tray support unit (104) by way of one or more fasteners.

13. The fiber optic closure (100) as claimed in claim 1, further comprising a cover unit (500) that is adapted to enclose the splicing tray support unit (104).

14. The fiber optic closure (100) as claimed in claim 1, wherein the first set of guiding structures (204) is adapted to pass incoming optical fiber of the one or more fiber cables towards the first wing (108a).

15. The fiber optic closure (100) as claimed in claim 1, wherein the second set of guiding structures (206) is adapted to pass incoming optical fiber of the one or more fiber cables towards the second wing (108b).

## Patentansprüche

1. Faseroptische Kabelmuffe (100) umfassend:
eine Splicekassette-Stützeinheit (104); und
eine Faserspeicherungseinheit (105), die mit der Splicekassette-Stützeinheit (104) gekoppelt ist, worin die Faserspeicherungseinheit (105) umfasst:
eine Faserführungseinheit (106), die an der Splicekassette-Stützeinheit (104) angeordnet ist, worin die Faserführungseinheit (106) erste und zweite Sätze von Führungsstrukturen (204, 206) umfasst, die dazu geeignet sind, jeweils eine oder mehrere ankommende optische Fasern und eine oder mehrere abgehende optische Fasern zu leiten, die durch die Faserführungseinheit (106) laufen;
**dadurch gekennzeichnet, dass**
die Faserspeicherungseinheit (105) einen oder mehrere Flügel (108a, 108b) umfasst, die an der Splicekassette-Stützeinheit (104) schwenkbar montiert sind, und dazu geeignet sind, den Durchgang der einen oder mehreren optischen Fasern in einer oder mehreren Leitungskonfigurationen zu ermöglichen.

2. Faseroptische Kabelmuffe (100) nach Anspruch 1, worin die Faserführungseinheit (106) ferner eine erste Seite und eine zweite Seite umfasst.

3. Faseroptische Kabelmuffe (100) nach Anspruch 2, worin der erste Satz von Führungsstrukturen (204) sich in der ersten Seite erstreckt und der zweite Satz von Führungsstrukturen (206) sich in der zweiten Seite erstreckt, um die eine oder mehrere optische Fasern zu der einen oder mehreren Flügeln zu führen.

4. Faseroptische Kabelmuffe (100) nach Anspruch 1, ferner umfassend eine Basis (102), die eine Vielzahl von Anschlüssen (112) hat, worin die Vielzahl von Anschlüssen Eingangsanschlüsse und Ausgangsausschlüsse umfasst.

5. Faseroptische Kabelmuffe (100) nach Anspruch 1, worin die Faserführungseinheit (106) ferner ein erstes Ende und ein zweites Ende umfasst, so dass das erste Ende mit der Basis (102) gekoppelt ist und das zweite Ende mit der Splicekassette-Stützeinheit (104) gekoppelt ist.

6. Faseroptische Kabelmuffe (100) nach Anspruch 1, worin jeder von dem ersten und dem zweiten Satz von Faserführungsstrukturen (204, 206) eine Vielzahl von horizontalen Platten (214a-214e) und eine Vielzahl von vertikalen Wänden (216a-216e) umfasst.

7. Faseroptische Kabelmuffe (100) nach Anspruch 1, worin die Vielzahl von horizontalen Platten (214a-214e) und die Vielzahl von vertikalen Wänden (216a-216e) jeweils von dem ersten und dem zweiten Satz von Faserführungsstrukturen (204, 206) so angeordnet sind, dass sie eine Vielzahl jeweils von linken und rechten Aussparungen bilden, um eine optische Faser der einen oder der mehreren optischen Fasern durchlaufen zu lassen.

8. Faseroptische Kabelmuffe (100) nach Anspruch 1, worin der eine oder mehrere Flügel (108a, 108b) erste und zweite Flügel umfassen, so dass der erste Flügel (108a) an der ersten Seite der Splicekassette-Stützeinheit montiert ist und der zweite Flügel (108b) an der zweiten Seite der Splicekassette-Stützeinheit (104) montiert ist.

9. Faseroptische Kabelmuffe (100) nach Anspruch 6, worin der erste Flügel (108a) dazu geeignet ist, sich in einer Richtung im Gegenuhrzeigersinn zu drehen, und der zweite Flügel (108b) dazu geeignet ist, sich in einer Richtung im Uhrzeigersinn zu drehen.

10. Faseroptische Kabelmuffe (100) nach Anspruch 6, worin der erste und der zweite Flügel (108a, 108b) mit der Splicekassette-Stützeinheit (104) jeweils mittels eines ersten und eines zweiten Drehzapfens abnehmbar gekoppelt sind.

11. Faseroptische Kabelmuffe (100) nach Anspruch 1, worin jeder von dem ersten und dem zweiten Flügel (108a, 108b) erste durchgehende dritte Ecken umfasst, so dass der erste und der zweite Flügel (108a, 108b) dazu geeignet sind, in Bezug auf die Splicekassette-Stützeinheit (104) an der ersten Ecke (300a) zu schwenken.

12. Faseroptische Kabelmuffe (100) nach Anspruch 1, worin die Faserführungseinheit (106) an der Basis (102) und an der Splicekassette-Stützeinheit (104) mittels eines oder mehrerer Befestigungselemente montiert ist.

13. Faseroptische Kabelmuffe (100) nach Anspruch 1, ferner umfassend eine Abdeckungseinheit (500), die dazu geeignet ist, die Splicekassette-Stützeinheit (104) umzuschließen.

14. Faseroptische Kabelmuffe (100) nach Anspruch 1, worin der erste Satz von Führungsstrukturen (204) dazu geeignet ist, ankommende optische Fasern des einen oder der mehreren Faserkabel zum ersten Flügel (108a) hin durchlaufen zu lassen.

15. Faseroptische Kabelmuffe (100) nach Anspruch 1, worin der zweite Satz von Führungsstrukturen (206) dazu geeignet ist, ankommende optische Fasern des einen oder der mehreren Faserkabel zum zweiten Flügel (108b) hin durchlaufen zu lassen.

## Revendications

1. Boîtier pour fibre optique (100) comprenant :
une unité de support de plateau d'épissurage (104) ; et
une unité de stockage de fibres (105) couplée à l'unité de support de plateau d'épissurage (104), dans lequel l'unité de stockage de fibres (105) comprend :
une unité de guidage de fibres (106) disposée sur l'unité de support de plateau d'épissurage (104), dans lequel l'unité de guidage de fibres (106) comprend un premier et un second ensemble de structures de guidage (204, 206) adaptées pour acheminer une ou plusieurs fibres optiques entrantes et une ou plusieurs fibres optiques sortantes, respectivement, passant à travers l'unité de guidage de fibres (106) ;
**caractérisé en ce que**
l'unité de stockage de fibres (105) comprend une ou plusieurs ailes (108a, 108b) montées pivotantes sur l'unité de support de plateau d'épissurage (104), et adaptées pour permettre le passage des un ou plusieurs câbles de fibres dans une ou plusieurs configurations d'acheminement.

2. Boîtier pour fibre optique (100) selon la revendication 1, dans lequel l'unité de guidage de fibres (106) comprend en outre un premier côté et un second côté.

3. Boîtier pour fibre optique (100) selon la revendication 2, dans lequel le premier ensemble de structures de guidage (204) s'étend dans le premier côté et le second ensemble de structures de guidage (206) s'étend dans le second côté pour guider les une ou plusieurs fibres optiques vers les une ou plusieurs ailes.

4. Boîtier pour fibre optique (100) selon la revendication 1, comprenant en outre une base (102) ayant une pluralité de ports (112), dans lequel la pluralité de ports comprend des ports d'entrée et des ports de sortie.

5. Boîtier pour fibre optique (100) selon la revendication 1, dans lequel l'unité de guidage de fibres (106) comprend en outre une première extrémité et une seconde extrémité de sorte que la première extrémité est couplée à la base (102) et la seconde extrémité est couplée à l'unité de support de plateau d'épissurage (104).

6. Boîtier pour fibre optique (100) selon la revendication 1, dans lequel chacun du premier et du second ensemble de structures de guidage de fibres (204, 206) comprend une pluralité de dalles horizontales (214a-214e) et une pluralité de parois verticales (216a-216e).

7. Boîtier pour fibre optique (100) selon la revendication 1, dans lequel la pluralité de dalles horizontales (214a-214e) et la pluralité de parois verticales (216a-216e) chacune du premier et du second ensemble de structures de guidage de fibres (204, 206) sont disposées pour former une pluralité d'évidements gauche et droit, respectivement, pour faire passer une fibre optique du ou des câbles à fibres.

8. Boîtier pour fibre optique (100) selon la revendication 1, dans lequel les une ou plusieurs ailes (108a, 108b) comprennent des première et seconde ailes de sorte que la première aile (108a) est montée sur le premier côté de l'unité de support de plateau d'épissurage et la seconde aile (108b) est montée sur le second côté de l'unité de support de plateau d'épissurage (104).

9. Boîtier pour fibre optique (100) selon la revendication 6, dans lequel la première aile (108a) est adaptée pour tourner dans le sens inverse des aiguilles d'une montre et la seconde aile (108b) est adaptée pour tourner dans le sens des aiguilles d'une montre.

10. Boîtier pour fibre optique (100) selon la revendication 6, dans lequel les première et seconde ailes (108a, 108b) sont couplées de manière amovible à l'unité de support de plateau d'épissurage (104) au moyen de premier et second pivots, respectivement.

11. Boîtier pour fibre optique (100) selon la revendication 1, dans lequel chacune des première et seconde ailes (108a, 108b) comprend des premier à troisième coins de sorte que les première et seconde ailes (108a, 108b) sont adaptées pour pivoter par rapport à l'unité de support de plateau d'épissurage (104) au niveau du premier coin (300a).

12. Boîtier pour fibre optique (100) selon la revendication 1, dans lequel l'unité de guidage de fibres (106) est montée sur la base (102) et l'unité de support de plateau d'épissurage (104) au moyen d'une ou de plusieurs attaches.

13. Boîtier pour fibre optique (100) selon la revendication 1, comprenant en outre une unité de couvercle (500) qui est adaptée pour enfermer l'unité de support de plateau d'épissurage (104).

14. Boîtier pour fibre optique (100) selon la revendication 1, dans lequel le premier ensemble de structures de guidage (204) est adapté pour faire passer la fibre optique entrante du ou des câbles à fibres vers la première aile (108a).

15. Boîtier pour fibre optique (100) selon la revendication 1, dans lequel le second ensemble de structures de guidage (206) est adapté pour faire passer la fibre optique entrante du ou des câbles à fibres vers la seconde aile (108b).
